(19) Europäisches Patentamt
European Patent Office
Office européen des brevets

(11) **EP 2 105 667 B1**

(12) **EUROPÄISCHE PATENTSCHRIFT**

(45) Veröffentlichungstag und Bekanntmachung des Hinweises auf die Patenterteilung:
**25.05.2016   Patentblatt 2016/21**

(51) Int Cl.:
*F23K 5/14* (2006.01)       *F16K 15/06* (2006.01)

(21) Anmeldenummer: **09154423.9**

(22) Anmeldetag: **05.03.2009**

(54) **Kolbenantihebeventil**

Piston anti-lift valve

Soupape à piston anti-levage

(84) Benannte Vertragsstaaten:
**CH DE FR GB IT LI**

(30) Priorität: **26.03.2008   DE 202008004192 U**

(43) Veröffentlichungstag der Anmeldung:
**30.09.2009   Patentblatt 2009/40**

(73) Patentinhaber: **AFRISO-EURO-INDEX GmbH
74363 Güglingen (DE)**

(72) Erfinder: **Frey, Marcus
75031 Eppingen (DE)**

(74) Vertreter: **Kohler Schmid Möbus Patentanwälte
Partnerschaftsgesellschaft mbB
Ruppmannstraße 27
70565 Stuttgart (DE)**

(56) Entgegenhaltungen:
**DE-A1- 4 029 909     US-A- 1 861 017
US-A- 3 180 352**

**Beschreibung**

Die vorliegende Erfindung betrifft ein Kolbenantiheberventil mit einem Tankanschluss, mit einem Sauganschluss, mit einem zwischen Tankanschluss und Sauganschluss angeordneten Ventilsitz und mit einem axial verschiebbar geführten Dichtkolben, der in dichtende Anlage an den Ventilsitz vorgespannt ist, wobei der Sauganschluss mit einem Ventilraum verbunden ist, der durch eine in Öffnungsrichtung des Dichtkolbens gerichtete Fläche des Dichtkolbens begrenzt ist.

Derartige Kolbenantiheberventil sind beispielsweise durch US 1 861 017 A und US 3 180 352 A bekannt geworden.

Antiheberventile werden als Sicherheitsarmatur in Saugleitungen von Ölfeuerungsanlagen nach DIN 4755 eingesetzt, bei denen der maximale Tankfüllstand oberhalb des tiefsten Saugleitungspunktes liegt. Das Antiheberventil verhindert bei eventueller Leckage in nachgeschalteten Anlagenteilen das Auslaufen bzw. Aushebern des Behälters. Es sind drei verschiedene Arten von Ventilen bekannt:

1. Membranantiheberventil:

Das Membranantiheberventil ist im Ruhezustand durch eigene Federkraft geschlossen. Der von einer Brennerpumpe in einer Saugleitung erzeugte Unterdruck öffnet das Membranantiheberventil, solange die Brennerpumpe läuft. Bei einer Undichtigkeit in der Saugleitung oder bei Stillstand der Brennerpumpe schließt das Membranantiheberventil selbstständig. Da die Abdichtung in der Regel durch einen Elastomer-O-Ring realisiert wird, benötigt die Dichtstelle einen relativ hohen Anpressdruck, d.h., es wird eine relativ starke Schließfeder benötigt. Entgegen der hohen Schließkraft wirkt der Unterdruck mit Hilfe einer Membrane als Kraftübersetzer. Die Federkraft muss größer sein als die hydrostatische Druckkraft, die durch die Höhendifferenz zwischen Membranantiheberventil und tiefstem Saugleitungspunkt erzeugt wird. Es gibt Membranantiheberventile mit einer festen oder einer einstellbaren Federvorspannung. Der übliche Einstellbereich liegt bei 1-4 m Höhendifferenz.

2. Kolbenantiheberventil:

Das Kolbenantiheberventil, wie z.B. aus US 1 861 017 A und US 3 180 352 A bekannt, verzichtet auf eine Kraftübersetzung und verwendet als Wirkfläche für den Unterdruck eine Ringabsatzfläche des Dichtkolbens. Das Funktionsprinzip entspricht ansonsten dem des Membranantiheberventils. Da die an der Ringabsatzfläche wirkenden Unterdruckkräfte klein sind, wird meist ein Elastomer-V-Ring zur Abdichtung verwendet. Aufgrund der kleinen Unterdruckkräfte ist das Kolbenantiheberventil allerdings empfindlicher bezüglich Verschmutzungen und Toleranzen der einzelnen Teile als ein Membranantiheberventil.

3. Magnetventil:

Das Magnetventil wird elektrisch vom Brenner angesteuert. Im Ruhezustand (Brennerstillstandzeiten) sperrt das Magnetventil die Saugleitung zwischen Tank und der nachfolgenden Anlage ab. Beim Einschalten des Brenners wird das an der Brennersteuerung angeschlossene Magnetventil geöffnet.

Demgegenüber ist es die Aufgabe der vorliegenden Erfindung, bei einem Kolbenantiheberventil der eingangs genannten Art die Empfindlichkeit gegenüber Toleranzen und Verschmutzungen zu reduzieren und einen tankseitigen Überdruck im Ventil zu verhindern.

Diese Aufgabe wird erfindungsgemäß dadurch gelöst, dass der Sitzdurchmesser des Ventilsitzes mindestens ca. 2-mal, vorzugsweise mindestens ca. 3-mal bis ca. 4-mal, größer als der kleinste bzw. lichte Öffnungsdurchmesser des Sauganschlusses ist und dass der Ventilraum mit dem Tankanschluss über ein Druckentlastungsventil verbunden ist, das im Dichtkolben angeordnet ist und bei einem im Ventilraum herrschenden Überdruck öffnet. Bei einem pumpenseitigen Überdruck, z.B. durch Temperaturausdehnung des in der Saugleitung befindlichen Öls, öffnet das Druckentlastungsventil und sorgt für eine Druckentlastung.

Besonders bevorzugt ist der Sitzdurchmesser des Ventilsitzes mindestens ca. 4-mal bzw. ca. 5-mal größer als der kleinste Öffnungsdurchmesser des Sauganschlusses.

Anders als die bekannten Kolbenantiheberventile hat das erfindungsgemäße Kolbenantiheberventil einen im Vergleich zum Sauganschluss größeren Wirkdurchmesser (Ventilsitzdurchmesser, Dichtdurchmesser) bzw. größeren Dichtkolbendurchmesser, so dass größere Unterdruck- bzw. Öffnungskräfte wirken und die Empfindlichkeit des Kolbenantiheberventils gegenüber Toleranzen und Verschmutzungen minimiert ist.

Für die Anpresskraft $F_{Dichtstelle}$, die notwendig ist, um den die Dichtstelle, also den Ventilsitz, des Kolbenantiheberventils abzudichten, gilt:

$$F_{Dichtstelle} = d_{wirk} \cdot \pi \cdot s_{kontakt} \cdot p_{Elastomer} \qquad (1)$$

mit:

$d_{wirk}$: Durchmesser der Dichtstelle, also Durchmesser des Ventilsitzes
$S_{kontakt}$ : Breite der Kontaktfläche zwischen Elastomerring und Gehäuse
$p_{Elastomer}$: notwendige Flächenpressung zwischen Elastomerring und Gehäuse.

Für die durch den Unterdruck in der Saugleitung erzeugte Druckkraft $F_{Druck}$ gilt:

$$F_{Druck} = d_{wirk}{}^2 \cdot \frac{\pi}{4} \cdot p_{saug} \qquad (2)$$

mit:

$d_{wirk}$: Durchmesser der Dichtstelle, also Durchmesser des Ventilsitzes
$p_{saug}$: Unterdruck in der Saugleitung

Diese beiden Gleichungen (1) und (2) beschreiben grob die Funktionsweise des Kolbenantiheberventils: Die Dichtkraft $F_{Dichtstelle}$ hängt linear vom Wirkdurchmesser $d_{wirk}$ ab, während die Druckkraft $F_{Druck}$ mit dem Wirkdurchmesser $d_{wirk}$ quadratisch zunimmt. Erfindungsgemäß kann aufgrund des gegenüber bekannten Kolbenantiheberventilen größeren Wirkdurchmessers des Dichtkolbens die Empfindlichkeit gegenüber Toleranzen und Verschmutzungen minimiert werden.

Besonders bevorzugt sind der Tankanschluss und der Sauganschluss jeweils als G3/8-Anschluss ausgebildet.

Weiterhin bevorzugt weist das erfindungsgemäße Kolbenantiheberventil einen mit dem Ventilraum verbundenen Zusatzanschluss auf, um insbesondere ein Manometer oder eine Druckausgleichseinrichtung (z.B. einen Kolbendruckspeicher) anschließen zu können.

Weitere Vorteile und vorteilhafte Ausgestaltungen des Gegenstands der Erfindung sind der Beschreibung, der Zeichnung und den Ansprüchen entnehmbar. Die gezeigte und beschriebene Ausführungsform ist nicht als abschließende Aufzählung zu verstehen, sondern hat vielmehr beispielhaften Charakter für die Schilderung der Erfindung.

Es zeigen:

Fig. 1    einen Längsschnitt des erfindungsgemäßen Kolbenantiheberventils;
Fig. 2    eine Seitenansicht des erfindungsgemäßen Kolbenantiheberventils von Fig. 1; und
Fig. 3    eine weitere Seitenansicht des erfindungsgemäßen Kolbenantiheberventils von Fig. 1 mit einem angeschlossenen Manometer.

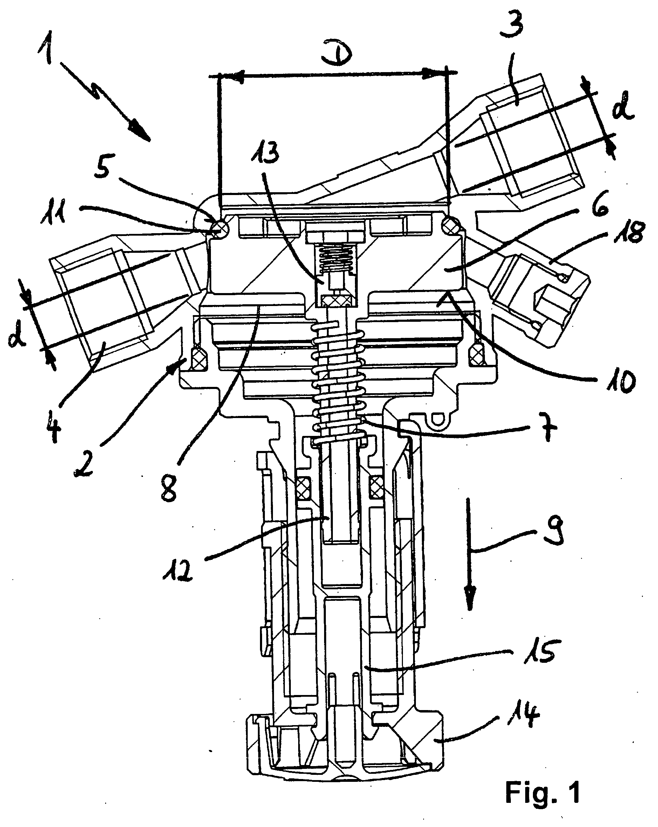

Das in **Fig. 1** gezeigte Kolbenantiheberventil **1** wird als Sicherheitsarmatur in Saugleitungen von Ölfeuerungsanlagen nach DIN 4755, bei denen der maximale Tankfüllstand oberhalb des tiefsten Saugleitungspunktes liegt, eingesetzt und zwischen Tank und Ölfeuerungsanlage (Brenner) angeordnet. Das Kolbenantiheberventil 1 verhindert bei eventueller Leckage in nachgeschalteten Anlagenteilen das Auslaufen (Aushebern) des Tanks.

Das Kolbenantiheberventil 1 umfasst ein mehrteiliges Gehäuse **2** mit einem Tankanschluss **3** und mit einem Sauganschluss **4**. Im Gehäuseinneren ist zwischen Tankanschluss 3 und Sauganschluss 4 ein Dicht- oder Ventilsitz **5** ausgebildet sowie ein Dichtkolben **6** axial verschiebbar geführt, der durch eine Schließfeder **7** nach oben in dichtende Anlage an den Ventilsitz **5** vorgespannt ist. Im Gehäuseinneren ist außerdem ein Ventilraum **8** vorgesehen, der mit dem Sauganschluss 4 verbunden und durch eine in Öffnungsrichtung **9** des Dichtkolbens 6 gerichtete Fläche **10** des Dichtkolbens 6 begrenzt ist. Der Sauganschluss 4 geht vom Ventilraum **8** mantelseitig ab, und der Ventilsitz 5 ist auf der dem Ventilraum **8** gegenüberliegenden Seite des Dichtkolbens 6 vorgesehen. Der Dichtkolben 6 weist eine als Elastomer-O-Ring ausgeführte Dichtung **11** auf, die mit dem Ventilsitz **5** zusammenwirkt. Außerdem weist der Dichtkolben 6 auf seiner dem Ventilsitz **5** abgewandten Seite einen Führungsschaft **12** auf, der sich in Öffnungsrichtung **9** erstreckt und im Gehäuse 2 verschiebbar geführt ist.

Der Tankanschluss 3 und der Sauganschluss 4 sind jeweils als G3/8-Anschluss mit einem Öffnungsdurchmesser **d** ausgebildet. Der Sitzdurchmesser **D** des Ventilsitzes 5 ist mindestens ca. 2-mal größer als der lichte bzw. kleinste Öffnungsdurchmesser d der Tank- und Sauganschlüsse 3, 4. Im gezeigten Ausführungsbeispiel beträgt der Sitzdurchmesser D etwa 40 mm und der kleinste Durchmesser d am Tank- bzw. Saugstutzen 3, 4 etwa 8 mm, so dass der Sitzdurchmesser D ca. 5-mal größer als der kleinste Öffnungsdurchmesser d der Tank- und Sauganschlüsse 3, 4 ist. Der von einer Brennerpumpe in einer Saugleitung und am Sauganschluss 4 erzeugte Unterdruck wirkt über den Ventilraum 8 auf die Fläche 10 des Dichtkolbens 6 in Öffnungsrichtung 9, und der Dichtkolben 6 hebt vom Ventilsitz 5 ab und das Kolbenantiheberventil 1 öffnet. Das Kolbenantiheberventil 1 bleibt geöffnet, solange die Brennerpumpe läuft. Bei einer Undichtigkeit in der Saugleitung oder bei Stillstand der Brennerpumpe wird der Dichtkolben 6 durch die Schließfeder 7 in Anlage an den Ventilsitz 5 gedrückt, d.h. das Kolbenantiheberventil 1 schließt bei fehlendem Unterdruck selbstständig.

Der Ventilraum 8 ist mit dem Tankanschluss 3 über ein Druckentlastungsventil **13** verbunden, das im Dichtkolben 6 angeordnet ist und bei einem im Ventilraum **8** herrschenden pumpenseitigen Überdruck - z.B. aufgrund einer Temperaturausdehnung des in der Saugleitung befindlichen Öls - öffnet.

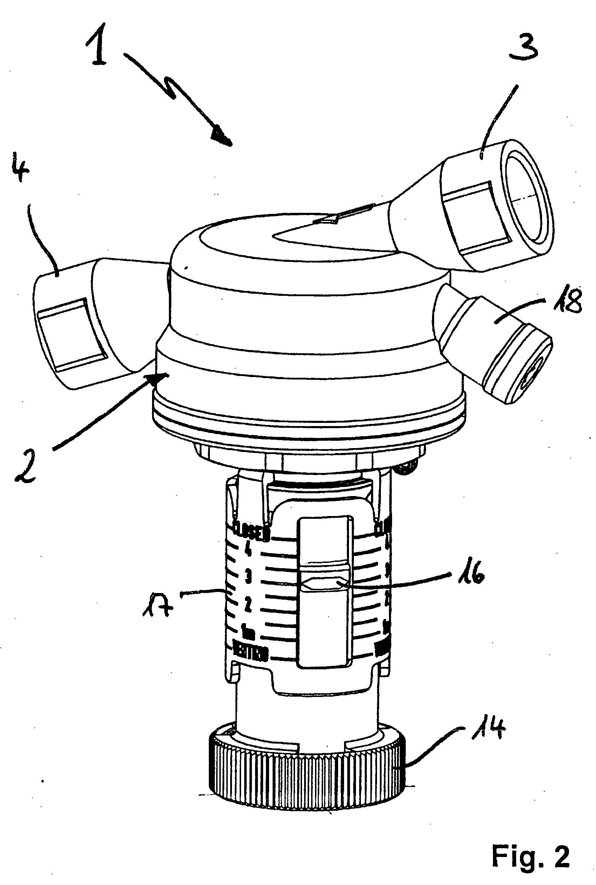

Die Schließfeder 7 ist auf dem Führungsschaft 12 angeordnet und einerseits am Dichtkolben 6 und andererseits an einer Stellschraube **14** abgestützt, in deren Schraubenschaft **15** der Führungsschaft 12 verschiebbar geführt ist. Die Stellschraube 14 ist in das Gehäuse 2 eingeschraubt und ermöglicht so das Einstellen der Federvorspannung der Schließfeder 7. Die Federkraft der Schließfeder 7 muss größer sein als die hydrostatische Druckkraft, die durch die Höhendifferenz zwischen Kolbenantiheberventil 1 und tiefstem Saugleitungspunkt erzeugt wird. Der übliche Einstellbereich der Stellschraube 14 liegt bei einer Höhendifferenz von 1 bis 4 Metern. Wie in **Fig. 2** gezeigt, ist mit der Stellschraube 14 ein Zeiger **16** bewegungsgekoppelt, der auf einer gehäuseseitigen Skala **17** die eingestellte Höhendifferenz anzeigt.

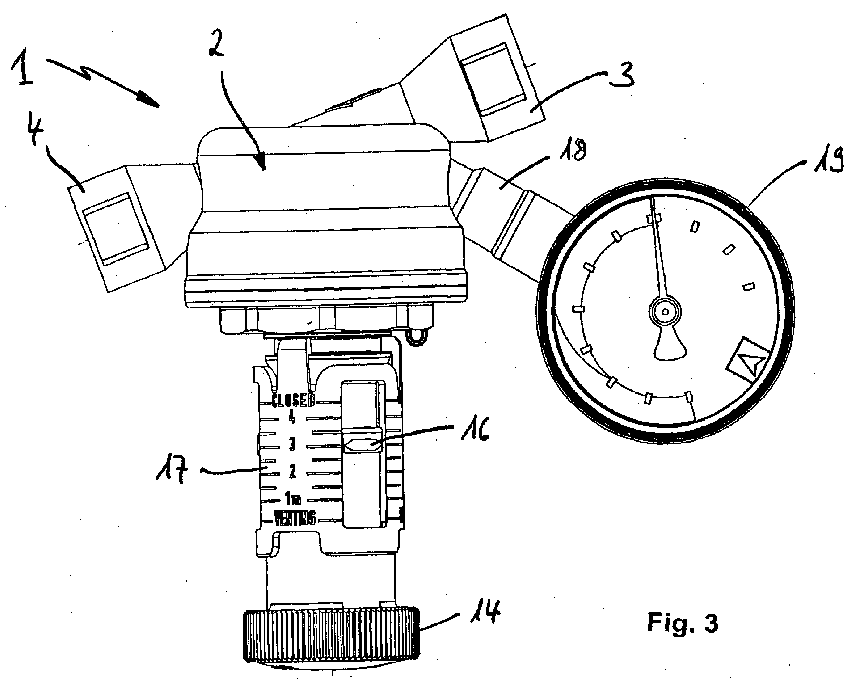

Am Gehäuse 2 ist noch ein mit dem Ventilraum 8 verbundener Zusatzanschluss **18** zum Anschließen einer Druckausgleicheinrichtung oder, wie in **Fig. 3** gezeigt, eines Manometers **19** vorgesehen.

**Patentansprüche**

1.  Kolbenantiheberventil (1) mit einem Tankanschluss (3), mit einem Sauganschluss (4), mit einem zwischen Tankanschluss (3) und Sauganschluss (4) angeordneten Ventilsitz (5) und mit einem axial verschiebbar geführten Dichtkolben (6), der in dichtende Anlage an den Ventilsitz (5) vorgespannt ist, wobei der Sauganschluss (4) mit einem Ventilraum (8) verbunden ist, der durch eine in Öffnungsrichtung (9) des Dichtkolbens (6) gerichtete Fläche (10) des Dichtkolbens (4) begrenzt ist,
    **dadurch gekennzeichnet,**
    **dass** der Sitzdurchmesser (D) des Ventilsitzes (5) mindestens ca. 2-mal, vorzugsweise mindestens ca. 3-mal bis ca. 4-mal, größer als der kleinste Öffnungsdurchmesser (d) des Sauganschlusses (4) ist und dass der Ventilraum (8) mit dem Tankanschluss (3) über ein Druckentlastungsventil (13) verbunden ist, das im Dichtkolben (6) angeordnet ist und bei einem im Ventilraum (8) herrschenden Überdruck öffnet.

2.  Kolbenantiheberventil nach Anspruch 1, **dadurch gekennzeichnet, dass** der Sitzdurchmesser (D) des Ventilsitzes (5) mindestens ca. 4-mal bzw. ca. 5-mal größer als der kleinste Öffnungsdurchmesser (d) des Sauganschlusses (4) ist.

3.  Kolbenantiheberventil nach einem der vorhergehenden Ansprüche, **dadurch gekennzeichnet, dass** der Tankanschluss (3) und/oder der Sauganschluss (4) als G3/8-Anschluss ausgebildet sind.

4.  Kolbenantiheberventil nach einem der vorhergehenden Ansprüche, **dadurch gekennzeichnet, dass** der Dichtkolben (6) eine insbesondere als O-Ring ausgeführte Dichtung (11) aufweist, die mit dem Ventilsitz (5) zusammenwirkt.

5.  Kolbenantiheberventil nach einem der vorhergehenden Ansprüche, **dadurch gekennzeichnet, dass** der Sauganschluss (4) von dem Ventilraum (8) mantelseitig abgeht.

6.  Kolbenantiheberventil nach einem der vorhergehenden Ansprüche, **dadurch gekennzeichnet, dass** der Ventilsitz (5) auf der dem Ventilraum (8) gegenüberliegenden Seite des Dichtkolbens (6) vorgesehen ist.

7.  Kolbenantiheberventil nach einem der vorhergehenden Ansprüche, **gekennzeichnet durch** einen Zusatzanschluss (18), der mit dem Ventilraum (8) verbunden ist.

8.  Kolbenantiheberventil nach Anspruch 7, **dadurch gekennzeichnet, dass** über den Zusatzanschluss (18) ein Manometer (19) oder eine Druckausgleicheinrichtung angeschlossen werden kann.

**Claims**

1. Piston anti-lift valve (1) comprising a tank connection (3) having a suction connection (4), a valve seat (5) arranged between the tank connection (3) and the suction connection (4), and a sealing piston (6) which is guided to be axially displaceable and is prestressed into sealing abutment on the valve seat (5), wherein the suction connection (4) is connected to a valve chamber (8) which is delimited by a surface (10) of the sealing piston (4), which surface is directed into the opening direction (9) of the sealing piston (6), **characterized in that** the seat diameter (D) of the valve seat (5) is at least approximately two times, advantageously at least approximately 3 times to approximately 4 times larger than the smallest opening diameter (d) of the suction connection (4) and that the valve chamber (8) is connected to the tank connection (3) via a pressure relief valve (13) which is arranged in the sealing piston (6) and opens when an overpressure prevails in the valve chamber (8).

2. Piston anti-lift valve according to claim 1, **characterized in that** the seat diameter (D) of the valve seat (5) is at least approximately 4 times or approximately 5 times larger than the smallest opening diameter (d) of the suction connection (4).

3. Piston anti-lift valve according to any one of the preceding claims, **characterized in that** the tank connection (3) and/or the suction connection (4) is/are designed as G3/8 connection.

4. Piston anti-lift valve according to any one of the preceding claims, **characterized in that** the sealing piston (6) has a seal (11) which is formed, in particular, as an O-ring and cooperates with the valve seat (5).

5. Piston anti-lift valve according to any one of the preceding claims, **characterized in that** the suction connection (4) exits the valve chamber (8) on the jacket side.

6. Piston anti-lift valve according to any one of the preceding claims, **characterized in that** the valve seat (5) is provided on the side of the sealing piston (6) opposite the valve chamber (8).

7. Piston anti-lift valve according to any one of the preceding claims, **characterized by** an additional connection (18) which is connected to the valve chamber (8).

8. Piston anti-lift valve according to claim 7, **characterized in that** a manometer (19) or a pressure compensation device can be connected via the additional connection (18).

**Revendications**

1. Clapet anti-siphonnage (1) à piston, comprenant un raccord (3) de réservoir, un raccord d'aspiration (4), un siège d'obturation (5) interposé entre ledit raccord (3) de réservoir et ledit raccord d'aspiration (4), et un piston d'étanchement (6) guidé à coulissement axial et précontraint pour venir s'appliquer, de manière étanche, contre ledit siège d'obturation (5), ledit raccord d'aspiration (4) étant relié à une chambre de distribution (8) délimitée par une surface (10) du piston d'étanchement (6) qui est orientée dans une direction (9) d'ouverture dudit piston d'étanchement (6), **caractérisé par le fait que** le diamètre (D) du siège d'obturation (5) est supérieur, d'au moins environ 2 fois, de préférence d'au moins environ 3 fois à environ 4 fois, au diamètre minimal (d) de l'ouverture du raccord d'aspiration (4) ; et par le fait que la chambre de distribution (8) est reliée au raccord (3) de réservoir par l'intermédiaire d'une soupape (13) de décharge de pression logée dans le piston d'étanchement (6), qui s'ouvre en présence d'une surpression régnant dans ladite chambre de distribution (8).

2. Clapet anti-siphonnage à piston, selon la revendication 1, **caractérisé par le fait que** le diamètre (D) du siège d'obturation (5) est supérieur, d'au moins environ 4 fois ou, respectivement, d'au moins environ 5 fois, au diamètre minimal (d) de l'ouverture du raccord d'aspiration (4).

3. Clapet anti-siphonnage à piston, selon l'une des revendications précédentes, **caractérisé par le fait que** le raccord (3) de réservoir et/ou le raccord d'aspiration (4) est (sont) réalisé(s) sous la forme d'un raccord G 3/8.

4. Clapet anti-siphonnage à piston, selon l'une des revendications précédentes, **caractérisé par le fait que** le piston d'étanchement (6) présente une garniture d'étanchement (11) réalisée, en particulier, sous la forme d'une bague torique et coopérant avec le siège d'obturation (5).

5. Clapet anti-siphonnage à piston, selon l'une des revendications précédentes, **caractérisé par le fait que** le raccord d'aspiration (4) s'étend à partir de l'enveloppe de la chambre de distribution (8).

6. Clapet anti-siphonnage à piston, selon l'une des revendications précédentes, **caractérisé par le fait que** le siège d'obturation (5) est prévu du côté du piston d'étanchement (6) pointant à l'opposé de la chambre de distribution (8).

7. Clapet anti-siphonnage à piston, selon l'une des revendications précédentes, **caractérisé par** un raccord additionnel (18) relié à la chambre de distribution (8).

8. Clapet anti-siphonnage à piston, selon la revendication 7, **caractérisé par le fait qu'**un manomètre (19), ou un dispositif d'équilibrage de pression, peut être raccordé par l'intermédiaire du raccord additionnel (18).

Fig. 1

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1861017 A
- US 3180352 A